# EUROPEAN PATENT APPLICATION

(11) **EP 4 335 680 A1**
(43) Date of publication of application: **13.03.2024**
(21) Application number: 23196504.7
(22) Date of filing: 11.09.2023
(51) Int. Cl.: B60K 35/10, B60K 35/60

(54) **MOTOR VEHICLE WITH ADAPTED STEERING WHEEL TO ADJUST QUANTITIES ASSOCIATED WITH THE CONTROL OF THE WHEELS**

(30) Priority: 12.09.2022 IT 202200018495
(71) Applicant: FERRARI S.p.A., 41100 Modena (IT)
(72) Inventor: BALLATORE, Marco, 41100 MODENA (IT); VARISCO, Stefano, 41100 MODENA (IT); CONIGLIARO, Vito, 41100 MODENA (IT); DE SIMONE, Raffaele, 41100 MODENA (IT); FLUMERI, Alessandro, 41100 MODENA (IT)
(74) Representative: Studio Torta S.p.A.

(57) **Abstract**

A motor vehicle (1) comprising at least one pair of wheels (2) aligned to each other and placed on respective opposite sides of the motor vehicle (1), control means (6) configured to adjust at least one control variable corresponding to an operative state of the wheels (2), and
a steering wheel (5) to steer the motor vehicle (1), characterized in that the control means (6) comprise a control device (10) arranged on the steering wheel (5) and coupled to the steering wheel (5) in a movable manner relative to the steering wheel (5) to be manipulable by a driver of the motor vehicle (1) to command an adjustment of the one or more control variables.

## Description

### CROSS-REFERENCE TO RELATED APPLICATIONS

This patent application claims priority from Italian patent application no. 102022000018495 filed on September 12, 2022, the entire disclosure of which is incorporated herein by reference.

### TECHNICAL FIELD

The invention concerns a motor vehicle, specifically a sports vehicle.

### PRIOR ART

Normally, motor vehicles are provided with control devices to control a state of the wheels, namely a set of static or dynamic variables that characterize the configuration of the wheels, which reflects directly on the dynamic behaviour of the motor vehicles.

For example, the variables can include the camber of the wheels, the toe-in of the wheels, and more generally the orientation or alignment of each of the wheels relative to the body, or the torque delivered to each of the wheels.

Given two wheels aligned in a direction transversal to the advancement direction, for example two drive wheels, one of the variables can assume differentiated values for the two wheels.

For example, the torque coming from the motor vehicle engine can be distributed between the axle shafts and therefore between the drive wheels by means of an appropriate electronic control, for example by means of a differentiated control of the brakes.

The control is generally based on information relative to the operative state of the motor vehicle, which includes for example quantities indicative of the steering angle, the yaw angle, the mean speed, and the like.

In general, the need is felt to increase the control versatility of the above-mentioned variables during driving of the motor vehicles.

An object of the invention is to meet the above need, preferably in a simple reliable manner.

### DISCLOSURE OF THE INVENTION

The object is achieved by a motor vehicle as defined in claim 1.

The dependent claims define particular embodiments of the invention.

### BRIEF DESCRIPTION OF THE DRAWINGS

Below, embodiments of the invention are described for a better understanding thereof by way of non-limiting example and with reference to the attached drawings in which:
- figure 1 is an overhead view of a motor vehicle according to the invention,
- figure 2 is a front view of a steering wheel of the motor vehicle, according to a first embodiment,
- figure 3 is a front view of a steering wheel of the motor vehicle, according to a second embodiment,
- figure 4 is a front view of a steering wheel of the motor vehicle, according to a third embodiment, and
- figure 5 is a front view of a steering wheel of the motor vehicle, according to a fourth embodiment.

### EMBODIMENTS OF THE INVENTION

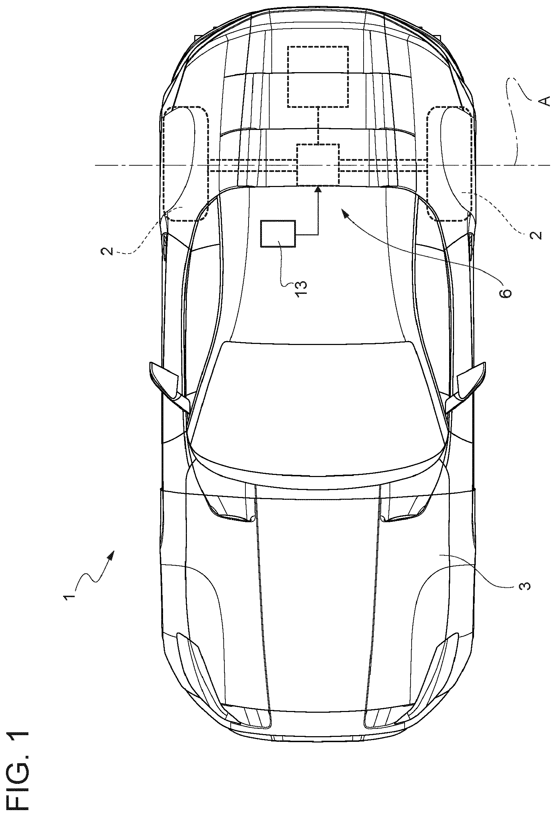

In figure 1, the reference number 1 is used to indicate, overall, a motor vehicle.

The motor vehicle 1 comprises a plurality of wheels, at least two of which form a pair of wheels 2 at opposite sides of the motor vehicle, namely a right-hand wheel and a left-hand wheel.

The wheels 2 are aligned with one another, in particular along an axis A transversal to the advancement direction of the motor vehicle 1.

The wheels 2 can be drive wheels, for example.

Specifically, the wheels 2 are rear drive wheels, but the motor vehicle could also be front drive.

Alternatively, the wheels of the motor vehicle 1 could be all drive wheels, without any loss of generality.

The motor vehicle 1 further comprises a body 3 suspended relative to the wheels 2 by means of suspensions of known type and not illustrated.

The body 3 defines a passenger compartment 4 of the motor vehicle 1, in which the latter has a driving position.

The motor vehicle 1 further comprises a steering wheel 5, in particular arranged in the driving position.

Again in the driving position, the motor vehicle 1 also comprises a seat not illustrated opposite the steering wheel 5 to support the driver in a seated position and suitable for gripping the steering wheel 5 with his/her hands.

The steering wheel 5 has the known function of steering the motor vehicle 1. In particular, the steering wheel 5 is rotatable around a steering wheel axis B.

In greater detail, the motor vehicle 1 comprises a steering device, for example of known type and not illustrated, including in particular an axle, specifically a rear axle.

The steering device is configured to steer at least two of the wheels of the motor vehicle 1 in response to a rotation of the steering wheel 5 around the axis B and in a manner corresponding to a rotation angle of the steering wheel 5.

Furthermore, the motor vehicle 1 comprises a control assembly 6 configured or controllable to adjust one or more control variables influencing or corresponding to an operative state of the wheels 2.

For example, the control assembly 6 could comprise a torque delivery unit, for example a traction or braking torque delivery unit, controllable to adjust a torque distribution between the drive wheels 2 or to independently adjust the respective torques delivered to the drive wheels 2.

In this case, the control variables could include a single variable directly corresponding to the torque distribution or two variables respectively corresponding to the torques delivered to the drive wheels 2.

Alternatively, the control variables could include one or more variables corresponding to an alignment or attitude of at least one of the wheels 2 relative to the body 3.

For example, the control variables could include a variable corresponding to a camber angle of one or both the wheels 2, a variable corresponding to a toe angle of one or both the wheels 2, a variable corresponding to a differentiated steering angle of one of the wheels 2 relative to the other of the wheels 2, and similar variables that influence the alignment or the orientation of one or both the wheels 2 relative to the body 2.

The control assembly 6 is shown in schematic form as it could be produced in many ways.

For example, the control assembly 6 could be a torque delivery unit including an engine/motor, in particular an internal combustion engine or an electric motor, and a transmission chain configured to transmit the torque from the engine/motor to the drive wheels and including in turn a differential suitable for the application of a dynamic control of the traction or torque vectoring on the wheels 2, like the known differentials with independent clutches to transmit differentiated torques to the wheels 2.

In general, a torque delivery unit of the control assembly 6 could be controllable to deliver separate torques to the respective wheels 2, for example by means of respective independent power or braking sources configured to deliver separate torques to the drive wheels 2 or by means of a torque distribution device controllable so as to adjust a distribution of an input torque, for example coming from a power source, to the drive wheels 2.

In the case of control variables corresponding to the alignment of at least one of the wheels 2, the control assembly 6 could comprise actuator devices known and not illustrated to adjust each of said variables, for example the camber and/or the toe of the wheels 2, and/or the steering of one of the wheels 2 in a differentiated manner relative to the steering of the other of the wheels 2.

The control assembly 6 comprises at least a control device 10 arranged on the steering wheel 5 or at the steering wheel 5. For clarity, the expression arranged on the steering wheel is understood to mean that the control device 10 can be arranged at any point of the steering wheel 5.

The control device 10 is coupled to the steering wheel 5 in a movable manner relative thereto.

The control device 10 can be operated by the driver to control at least one of the control variables by means of the control assembly 6.

More precisely, the control device 10 comprises a manipulable portion or control 11, for example a handle, a lever, a blade, a button, a touch-sensitive surface, a rod, and the like.

In addition, the control device 10 preferably comprises a transducer 12 configured to detect a quantity indicative of a movement of the manipulable portion 11 relative to the steering wheel 5. In fact, the manipulable portion 11 is movable relative to the steering wheel 5, in particular manually by the driver.

The transducer 12 is furthermore configured to generate a signal corresponding to the quantity detected.

The control device 10 further comprises a control unit 13 configured to extract information relative to the movement of the manipulable portion 11 from the signal generated by the transducer 12 and to control the control assembly 6 in a manner corresponding to the movement of the manipulable portion 11 based on the information extracted, thus causing a variation in the controlled control variable corresponding to the movement of the manipulable portion 11 by means of the control assembly 6.

The control variable could correspond to one of various state quantities, in turn possibly corresponding to a relation between quantities that express respective conditions of the wheels 2.

For example, the control variable could be a ratio between quantities, for example between the torques respectively exerted on the wheels 2 or a ratio between two angles respectively indicative of an orientation of the wheels 2 relative to the body 3, for example differentiated steering, camber or toe angles.

For example, a ratio that could define a control variable corresponding to the torque distribution between the wheels 2 could be a distribution ratio relative to the sum of the torques exerted on the wheels 2.

The control assembly 6 is configured so that it can adjust each of the control variables continuously throughout the relative domain. In other words, any value for each of the control variables, within predefined limits or also in general, could be achieved through the control assembly 6.

For example, if the control variable could be expressed in terms of a ratio between quantities respectively relative to the wheels 2, all the real values of the ratio could be obtained via the delivery control assembly 6.

In other words, the control assembly 6 is configured to ensure controllability of the control variables by means of the control device 10. Precisely, the term controllability is to be understood here according to the meaning attributed to it by the control theory.

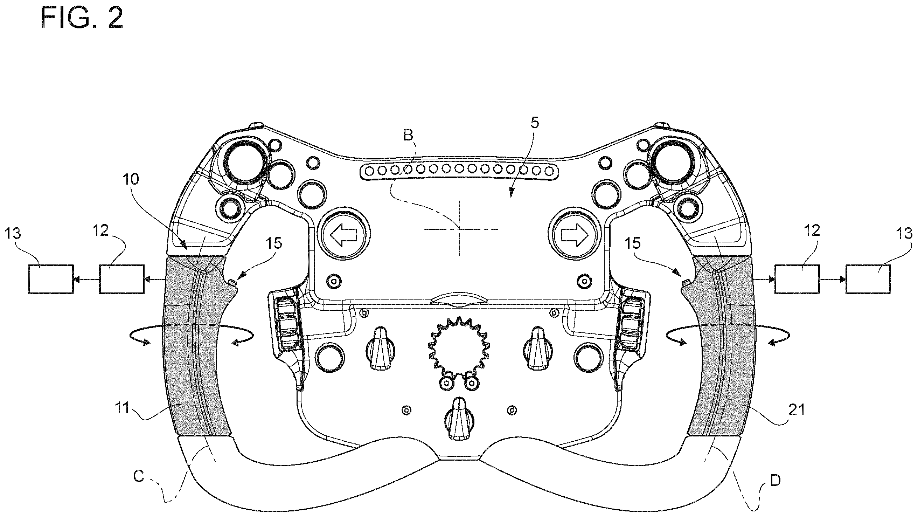

Preferably, as illustrated in figure 2, the movement of the manipulable portion 11 is a rotation movement around an axis C.

According to an embodiment, for example the one shown in figure 2, the axis C belongs to a plane orthogonal to the axis B.

In particular, the manipulable portion 11 comprises a handle rotating around the axis C and extending along the axis C.

In other words, the manipulable portion 11 is coupled to the steering wheel 5 in a rotary manner around the axis C, so that a rotation or more generally a movement of the manipulable portion 11 corresponds to a variation of one of the control variables, for example one of the torques delivered to the drive wheels 2 relative to the other of the same torques, or the value of an angle for one of the wheels 2 relative to the value of the same angle for the other of the wheels 2, where the angle can be any angle of those already mentioned in this description relative to the body 3. Alternatively, the variation could also be in absolute terms instead of in relative terms.

Preferably, the motor vehicle 1 further comprises a releasable locking device 15 configured to fix or lock the manipulable portion 11 to the steering wheel 5 in a selectively releasable manner.

More specifically, the locking device 15 blocks the movement of the manipulable portion 11 when not deliberately released, for example by the driver.

In other words, the movement of the manipulable portion 11 is freed by the locking device 15 only when the latter is released. The locking device 15 can be manually released by the driver.

Although the idea of using the locking device 15 is in itself innovative, the function of the locking device 15 can be performed by various types of known mechanisms, for example with electromechanical or purely mechanical actuation, which will therefore not be described in detail.

By way of example, the locking device 15 could comprise a pin pushed by means of a spring into a seat provided on the manipulable portion 11 and an electrically or mechanically operated mechanism, for example by means of a push-button or equivalent control on the steering wheel 5 or on the manipulable portion 11, to release the pin from the seat, thus releasing or freeing the movement of the manipulable portion 11 relative to the steering wheel 5.

The spring exerts an elastic reaction such as to return the pin into the seat when the mechanism is not operated, so as to ensure locking of the manipulable portion 11 to the steering wheel 5.

Preferably, the manipulable portion 11 has a rest position corresponding to a null variation of the control variables.

More preferably, the motor vehicle 1 comprises a position return device of known type and not illustrated configured to produce a reaction in response to a movement of the manipulable portion 11 from the rest position, in which the reaction tends to reset the manipulable portion 11 to the rest position.

For example, the position return device could comprise a spring for producing the reaction in a manner proportional to the movement.

As already mentioned above, the signal generated by the transducer 12 corresponds to the indicative quantity of the movement of the manipulable portion 11, here specifically defined by rotation around the axis C.

In greater detail, the control device 10 further comprises a further manipulable portion or control 21 arranged on the steering wheel 5 and coupled thereto in a rotatable manner around an axis D.

The manipulable portion 21 is arranged in a separate position from the manipulable portion 11.

Preferably, in the embodiment of figure 2, one or both the axes C, D are curvilinear. In particular, the axes C, D belong to the same ideal closed curve, for example circular or elliptic.

The manipulable portion 21 can be identical in construction terms to the manipulable portion 11.

Furthermore, the manipulable portion 21 is preferably coupled to the steering wheel 5 in the same way in which the manipulable portion 11 is coupled to the steering wheel 5.

The respective movements, namely the respective rotations of the manipulable portions 11, 21 around the axes C, D, correspond to corresponding variations of control variables respectively relative to the drive wheels 2.

The control variables are preferably homologous, namely of the same type, but refer respectively to the wheels 2.

In other words, the control group is configured to adjust at least two control variables respectively corresponding to operative states respectively associated with or relative to the wheels 2.

The variations can be absolute, in the sense that the rotation of each of the manipulable portions 11, 21 corresponds to a relative increase or decrease in the corresponding variable of the control variables, for example the torques delivered to the wheels 2.

In particular, the movement or more specifically the rotation in a direction corresponds to an increase, while the rotation in an opposite direction corresponds to a decrease in the corresponding variable of the control variables.

The variations can also be relative, in the sense that the rotation of each of the manipulable portions 11, 21 corresponds to a relative increase or decrease in the corresponding variable of the control variables, but as a function of the other among the control variables, for example proportionally to the other among the control variables or according to any predefined relation or law, without any loss of generality.

With regard to the correspondences between the rotations and the control variables, what has already been explained with reference to the rotation of the manipulable portion 11 also applies to the rotation of the manipulable portion 21.

Namely, the correspondence is obtained through transduction of the rotation and control by means of a specific unit, for example the same control unit 13, based on the result of the transduction.

Actually, the manipulable portion 21 is not necessary. In fact, according to an alternative not illustrated, the manipulable portion 11 is sufficient for controlling a control variable that corresponds to variations in the operative states of one or both the wheels 2.

For example, respective rotations of the manipulable portion 11 around the axis C in opposite directions could correspond respectively to an increase and a decrease in a ratio of one of the torques exerted on the wheels 2 or in a value of an alignment angle for one of the wheels 2 on the other of the torques exerted on the wheels 2 or respectively on a value of the same alignment angle for the other of the wheels 2.

Once again, the alignment angle can be any one of the angles already mentioned in this description.

The correspondences can be obtained by means of transduction and consequent control, analogously to what has already been described above.

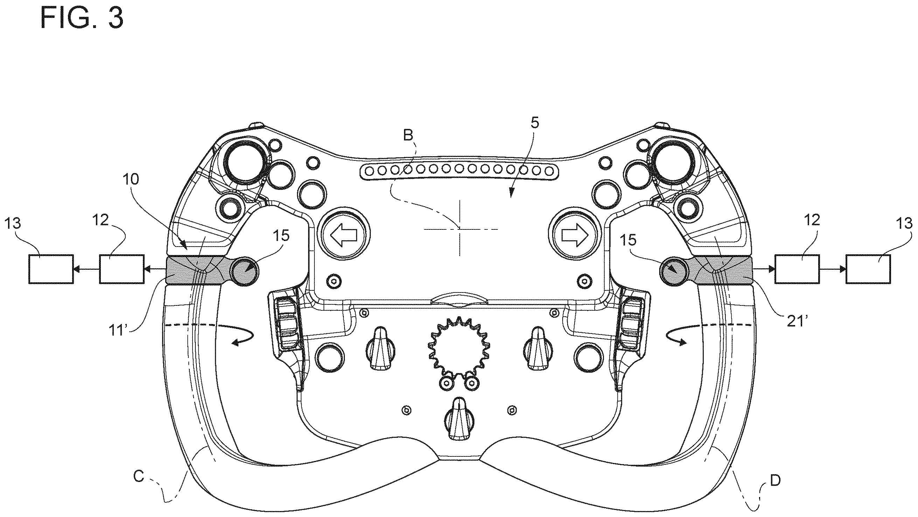

A further embodiment will now be described with reference to figure 3. The embodiment of figure 3 is similar to that of figure 2, and will therefore be described only in the part that distinguishes it from the latter. Where possible, the same reference symbols will be used to indicate the same features.

In the embodiment of figure 3, the manipulable portion 11 is replaced in construction terms, although the function does not change, by a manipulable portion 11'. The manipulable portion 11' differs from the manipulable portion 11 since it comprises a handle rotating around the axis C but extending transversely or more precisely radially relative to the axis C.

In practice, instead of rotating around its own axis, like the manipulable portion 11, the manipulable portion 11' has an end hinged around the axis C.

In the embodiment of figure 3, the control device 10 comprises a further manipulable portion 21' analogous in construction terms to the manipulable portion 11' and having the same function as the manipulable portion 21 in figure 2.

The manipulable portion 21' is in fact intended to replace the manipulable portion 21.

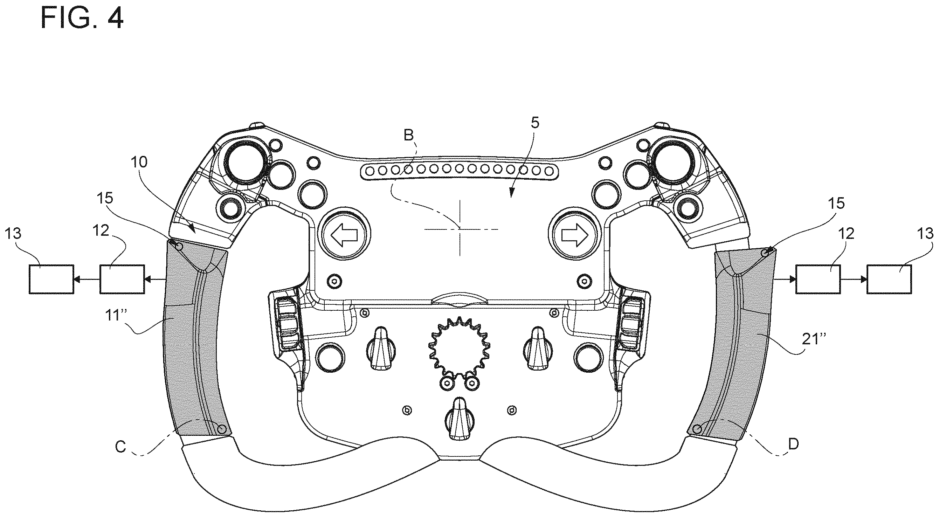

A further embodiment will now be described with reference to figure 4. The embodiment of figure 4 is similar to that of figure 2, and will therefore be described only in the part that distinguishes it from the latter. Where possible, the same reference symbols will be used to indicate the same features.

According to the embodiment of figure 4, the manipulable portion 11 is replaced in construction terms, although the function does not change, by a manipulable portion 11".

The manipulable portion 11" is arranged on the steering wheel 5 and coupled to the steering wheel 5 in a rotary manner around an axis C" , which is orthogonal to the plane of the steering wheel, in turn orthogonal to the axis B, or is alternatively parallel to the latter.

According to a variation of this embodiment not illustrated, the axis C" is oriented differently and therefore the control 11" is rotatable in a circular direction arranged around the axis C" and lying on a plane transversal or more preferably orthogonal to the plane of the steering wheel. The latter plane would be orthogonal to the axis C".

In the embodiment of figure 4, the control device 10 comprises a further manipulable portion 21" analogous in construction terms to the manipulable portion 11" and having the same function as the manipulable portion 21 in figure 2. The manipulable portion 21" is in fact intended to replace the manipulable portion 21.

The manipulable portion 21" is arranged on the steering wheel 5 and coupled to the steering wheel 5 in a rotary manner around an axis D" , which is orthogonal to the plane of the steering wheel, in turn orthogonal to the axis B.

According to a variation not illustrated of this embodiment, the axis D" is oriented differently, and therefore the control 21" is rotatable in a circular direction arranged around the axis D" and lying on a plane transversal or more preferably orthogonal to the plane of the steering wheel. The latter plane would be orthogonal to the axis D".

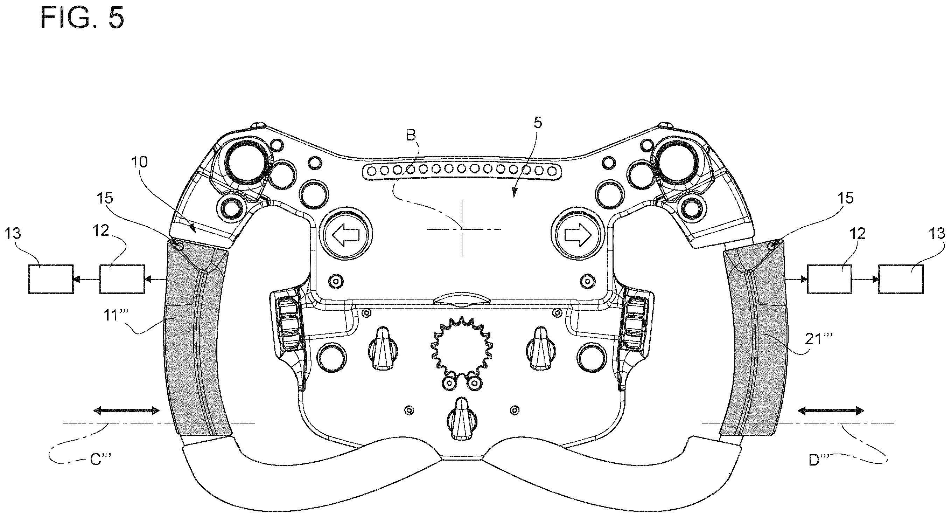

A further embodiment will now be described with reference to figure 5. The embodiment of figure 5 is similar to that of figure 2, and will therefore be described only in the part that distinguishes it from the latter. Where possible, the same reference symbols will be used to indicate the same features.

According to the embodiment of figure 5, the manipulable portion 11 is replaced in construction terms, although the function does not change, by a manipulable portion 11‴.

The manipulable portion 11‴ is arranged on the steering wheel 5 and coupled to the steering wheel 5 in a movable manner along a translation axis C‴, which can lie on the plane of the steering wheel or be transversal to the latter, according to a variation not illustrated. In other words, the manipulable portion 11‴ can translate relative to the steering wheel 5 along the translation axis C‴.

In the embodiment of figure 5, the control device 10 comprises a further manipulable portion 21‴ analogous in construction terms to the manipulable portion 11‴ and having the same function as the manipulable portion 21 in figure 2. The manipulable portion 21‴ is in fact intended to replace the manipulable portion 21.

The manipulable portion 21" is arranged on the steering wheel 5 and coupled to the steering wheel 5 in a movable manner along a translation axis D‴, which can lie on the plane of the steering wheel or be transversal to the latter according to a variation not illustrated.

In other words, the manipulable portion 11‴ can translate relative to the steering wheel 5 along the translation axis D‴. Preferably, the axes C‴, D‴ are parallel to each other.

The translation movements of the manipulable portions 11‴, 21‴ replace the rotations of the manipulable portions 11, 21, with the same functions.

From the above, the advantages of the seat assembly according to the invention are evident.

The arrangement of the control device 10 on the steering wheel allows the driver to manually adjust the control variables as required. This results in greater control versatility of the motor vehicle 1.

Furthermore, the driver has greater control over the motor vehicle 1, thus considerably improving the driving experience of the driver.

Furthermore, the control device 10 allows an expert driver to manually optimize driving performance.

In fact, an expert driver can have, for example, full control over understeer or oversteer of the motor vehicle 1 on bends.

Furthermore, the driver can fully exploit the characteristics of the motor vehicle 1, if necessary deciding to use a cornering technique involving drifting of the motor vehicle 1.

Lastly it is clear that modifications and variations that do not depart from the protective scope defined by the claims can be made to the motor vehicle 1 according to the invention.

For example, number adjectives such as first, second, third, etc. have only a clarifying purpose and therefore do not necessarily have to be considered as limiting.

Furthermore, the mechanical parts described and illustrated can be provided in a different number or in different forms, without departing from the scope of the invention.

In addition, the dimensions of the various components described and illustrated are not necessarily linked to their arrangement and configuration, hence the dimensions are independent of the arrangements and configurations.

Furthermore, the various embodiments and variations described can be combined with one another to form further embodiments.

## Claims

1. A motor vehicle (1) comprising
- at least one pair of wheels (2) aligned to each other and placed on respective opposite sides of the motor vehicle (1),
- control means (6) configured to adjust at least one control variable corresponding to an operative state of the wheels (2), and
- a steering wheel (5) to steer the motor vehicle (1), **characterized in that** the control means (6) comprise a control device (10) arranged on the steering wheel (5) and coupled to the steering wheel (5) in a movable manner relative to the steering wheel (5) to be manipulable by a driver of the motor vehicle (1) to command an adjustment of the at least one control variable.

2. The motor vehicle according to claim 1, wherein the at least one control variable corresponds to a torque distribution between the wheels (2) or to an alignment of at least one the wheels (2) relative to a body (3) of the motor vehicle (1).

3. The motor vehicle according to claim 1 or 2, wherein the control device (10) comprises a first control (11; 11'; 11") coupled to the steering wheel (5) in a rotary manner around a first axis (C; C"), so that a rotation of the first control (11; 11'; 11") around the first axis (C; C") corresponds to a variation of the at least one control variable.

4. The motor vehicle according to claim 3, wherein respective rotations of the first control (11; 11'; 11") around the first axis (C; C") according to opposite directions correspond to an increase and to a decrease, respectively, of the at least one control variable.

5. The motor vehicle according to claim 3, wherein the control means (6) are configured to adjust a first and a second control variable respectively corresponding to a first operative state of one of the wheels (2) and to a second operative state of the other one of the wheels (2), the control device (10) comprising a second control (21; 21'; 21") coupled to the steering wheel (5) in a rotary manner around a second axis (D; D"), so that respective rotations of the first and of the second command (11, 21; 11', 21'; 11", 21") around the first and the second axis (C, D; C"; D"), respectively, correspond to corresponding variations of the first and the second control variable.

6. The motor vehicle according to any one of the claims from 3 to 5, wherein the steering wheel (5) has a rotation axis (B) orthogonal to a steering wheel plane comprising the first axis (C) .

7. The motor vehicle according to claim 6, wherein the first control (11; 11') comprises a handle rotating around the first axis and extending along the first axis (C).

8. The motor vehicle according to claim 6, wherein the first control (11') comprises a handle rotating around the first axis (C) and extending transversely to the first axis (C).

9. The motor vehicle according to any one of the claims from 3 to 5, wherein the steering wheel (5) has a rotation axis (B) orthogonal to a steering wheel plane orthogonal, in turn, to the first axis (C").

10. The motor vehicle according to any of the claims from 3 to 5, wherein the first control (11") is rotatable according to a circular direction arranged around the first axis (C") and lays on a plane transversal to a steering wheel plane orthogonal to a rotation axis (B) of the steering wheel (5).

11. The motor vehicle according to claim 1 or 2, wherein the control device (10) comprises a first control (11; 11'; 11") coupled to the steering wheel (5) in a movable manner along a first translation axis, so that a translation of the first control (11; 11'; 11") along the first translation axis corresponds to a variation of the at least one control variable.

12. The motor vehicle according to claim 11, wherein respective translations of the first control (11, 11', 11") along the translation axis according to opposite directions correspond to an increase and to a decrease, respectively, of the at least one control variable.

13. The motor vehicle according to claim 11, wherein the control means (6) are configured to adjust a first and a second control variable respectively corresponding to a first operative state of one of the wheels (2) and to a second operative state of the other one of the wheels (2), the control device (10) comprising a second control (21; 21'; 21") coupled to the steering wheel (5) in a movable manner along a second translation axis, so that respective translations of the first and of the second command (11, 21; 11', 21'; 11", 21") along the first and the second translation axis (C, D; C"; D"), respectively, correspond to corresponding variations of the first and the second control variable.

14. The motor vehicle according to any of the claims from 3 to 13, further comprising releasable locking means (15) configured to fix the first control (11; 11'; 11") to the steering wheel (5) in a selectively releasable manner, so that the first control (11; 11'; 11") goes back to being capable of moving relative to the steering wheel (5) once the locking means (15) are released.
